# EUROPEAN PATENT APPLICATION

(11) **EP 4 773 285 A1**
(43) Date of publication of application: **08.07.2026**
(21) Application number: 23950815.3
(22) Date of filing: 31.08.2023
(51) Int. Cl.: H01M 10/0562, H01M 4/38, H01M 4/525, H01M 10/052, H01M 10/058

(54) **METHOD FOR PRODUCING ALL-SOLID-STATE BATTERY**

(71) Applicant: Nissan Motor Co., Ltd., Yokohama-shi, Kanagawa 221-0023 (JP)
(72) Inventor: OOTANI, Issei, Atsugi-shi, Kanagawa 243-0123 (JP)
(74) Representative: Osha BWB
(86) International application number: PCT/JP2023/031973
(87) International publication number: WO 2025/046872

(57) **Abstract**

An object of the present invention is to provide a means for obtaining an all-solid-state battery excellent in both capacity and rapid charge characteristics.

The present invention provides a method for manufacturing an all-solid-state battery in which a power generating element is sealed inside a battery outer casing body, the power generating element including: a positive electrode including a positive electrode active material layer containing a positive electrode active material and a first solid electrolyte; a negative electrode including a negative electrode active material layer containing a negative electrode active material; and a solid electrolyte layer interposed between the positive electrode and the negative electrode and containing a second solid electrolyte, the manufacturing method including: a chemical conversion step including a step of initially charging the power generating element in an inert gas atmosphere; and a step of sealing the power generating element inside the battery outer casing body under reduced pressure after the chemical conversion step.

## Description

### TECHNICAL FIELD

The present invention relates to a method for manufacturing an all-solid-state battery.

### BACKGROUND ART

In recent years, research and development on an all-solid-state battery using an oxide-based or sulfide-based solid electrolyte as an electrolyte have been actively conducted. The solid electrolyte is a material mainly made of an ion conductor that enables ion conduction in a solid. For this reason, the all-solid-state battery has the advantage that, in principle, various problems caused by a combustible organic electrolyte solution do not occur unlike the conventional liquid-type secondary battery using a non-aqueous electrolyte. In general, use of a high-potential and large-capacity positive electrode material and a large-capacity negative electrode material can achieve significant improvement in output density and energy density of a battery.

A general all-solid-state battery has a structure in which a power generating element formed by laminating a positive electrode, a solid electrolyte layer, and a negative electrode in this order is sealed inside a battery outer casing body. In the manufacture of an all-solid-state battery, in order to improve the performance of the battery, a step of initially charging a power generating element in an oxygen-containing atmosphere and then vacuum-sealing the power generating element is performed (JP 2017-126422 A).

### SUMMARY OF INVENTION

However, according to the study of the present inventor, it has been found that when the power generating element of the all-solid-state battery is initially charged in an oxygen-containing atmosphere as described in JP 2017-126422 A, charge-discharge efficiency may be reduced. On the other hand, it has been found that when initial charging of the power generating element is performed under reduced pressure, sufficient rapid charge characteristics may not be obtained.

Therefore, an object of the present invention is to provide a means for obtaining an all-solid-state battery excellent in both capacity and rapid charge characteristics.

The present inventor has conducted intensive studies to solve the above problem. As a result, the present inventor has found that the above problems can be solved by performing initial charging in an inert gas atmosphere and then performing a step of sealing a battery element under reduced pressure, and has completed the present invention.

That is, one aspect of the present invention is a method for manufacturing an all-solid-state battery in which a power generating element is sealed inside a battery outer casing body, the power generating element including: a positive electrode including a positive electrode active material layer containing a positive electrode active material and a first solid electrolyte; a negative electrode including a negative electrode active material layer containing a negative electrode active material; and a solid electrolyte layer interposed between the positive electrode and the negative electrode and containing a second solid electrolyte, the manufacturing method including: a chemical conversion step including a step of initially charging the power generating element in an inert gas atmosphere; and a step of sealing the power generating element inside the battery outer casing body under reduced pressure after the chemical conversion step.

### BRIEF DESCRIPTION OF DRAWING

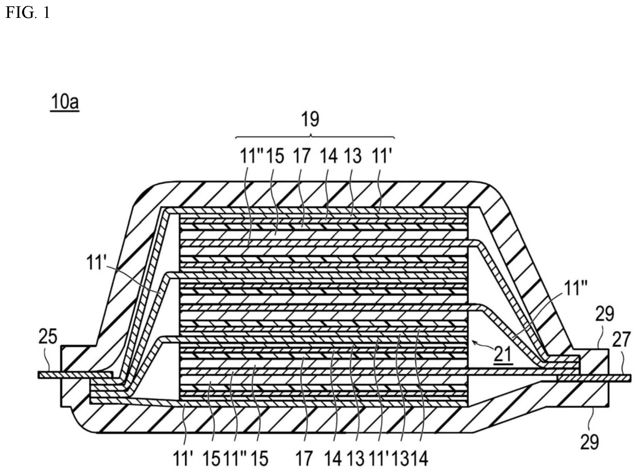

Fig. 1 is a cross-sectional view schematically illustrating an overall structure of a laminate type (internal parallel connection type) all-solid-state lithium secondary battery (laminate type secondary battery) as one embodiment of the present invention.

### DESCRIPTION OF EMBODIMENTS

One aspect of the present invention is a method for manufacturing an all-solid-state battery in which a power generating element is sealed inside a battery outer casing body, the power generating element including: a positive electrode including a positive electrode active material layer containing a positive electrode active material and a first solid electrolyte; a negative electrode including a negative electrode active material layer containing a negative electrode active material; and a solid electrolyte layer interposed between the positive electrode and the negative electrode and containing a second solid electrolyte, the manufacturing method including: a chemical conversion step including a step of initially charging the power generating element in an inert gas atmosphere; and a step of sealing the power generating element inside the battery outer casing body under reduced pressure after the chemical conversion step. According to the method for manufacturing an all-solid-state battery according to the present aspect, an all-solid-state battery excellent in both capacity and rapid charge characteristics can be obtained.

As described in JP 2017-126422 A, in the manufacture of an all-solid-state battery having a structure in which a power generating element formed by laminating a positive electrode, a solid electrolyte layer, and a negative electrode in this order is sealed inside a battery outer casing body, a step of initially charging the power generating element in an oxygen-containing atmosphere, and then vacuum-sealing the power generating element is performed. However, it has been found that when the power generating element is initially charged in an oxygen-containing atmosphere, charge-discharge efficiency may be reduced. This is considered to be due to the occurrence of oxidation or deterioration of the positive electrode active material, the negative electrode active material, the solid electrolyte, and the like by performing the initial charging in the oxygen-containing atmosphere.

On the other hand, it has been found that when the power generating element is initially charged under reduced pressure, the charge-discharge characteristics are improved, but the resistance is increased, and sufficient rapid charge characteristics may not be obtained. On the other hand, in the manufacturing method of the present invention, the power generating element is initially charged in an inert gas atmosphere, and then sealed under reduced pressure. Thereby, it has been found that an increase in resistance is suppressed and the rapid charge characteristics are improved.

In a reduced-pressure (reducing) atmosphere, a side reaction (for example, reduction of the positive electrode active material by the solid electrolyte) between the solid electrolyte and the positive electrode active material may proceed at a contact portion between the positive electrode active material and the solid electrolyte. As a result, it is considered that when the initial charging is performed under reduced pressure, a layer of a reaction product due to side reaction is formed on the surface of the particles of the positive electrode active material, leading to a significant increase in resistance. For example, in a positive electrode active material of a metal oxide, the metal oxide is reduced to form a metal layer on the surface of the particles of the positive electrode active material, so that the resistance can be increased. However, when initial charging is performed in an inert gas atmosphere, the positive electrode active material forms a structurally-altered layer on the particle surface when the structure is changed due to charging. The increase in resistance due to the formation of the structurally-altered layer is very small as compared with the increase in resistance when the initial charging is performed in a reduced pressure atmosphere, and further side reactions between the positive electrode active material and the solid electrolyte can be suppressed by the formation of the structurally-altered layer.

In addition, the present inventor has found that neither a decrease in capacity nor an increase in resistance occurs even in a reduced pressure state after initial charging is performed in an inert gas atmosphere. The present inventor has found that the rapid charge characteristics are improved by performing initial charging in an inert gas atmosphere and then depressurizing the inside of the battery outer casing body. After the initial charging is performed in an inert gas atmosphere, the inside of the battery outer casing body is depressurized, so that the power generating element is uniformly subjected to atmospheric pressure restraint in the lamination direction of the battery up to the end portion thereof. Thereby, it is considered that even when charging and discharging are performed at a high current density, a dendrite short circuit associated with a non-uniform reaction hardly occurs, and rapid charge characteristics can be improved.

Hereinafter, embodiments of the present invention will be described with reference to the accompanying drawings. In the description of the drawings, the same elements are denoted by the same reference numerals, and redundant description will be omitted. Dimensional ratios in the drawings are exaggerated for convenience of description, and may be different from actual ratios.

Fig. 1 is a cross-sectional view schematically illustrating an overall structure of a laminate type (internal parallel connection type) all-solid-state lithium secondary battery (hereinafter, also simply referred to as "laminate type secondary battery") as one embodiment of the present invention. Note that Fig. 1 illustrates a cross section of a laminate type secondary battery when charged in a lithium-deposition type all-solid-state battery. A laminate type secondary battery 10a illustrated in Fig. 1 has a structure in which a power generating element 21 having a substantially rectangular shape in which a charge-discharge reaction actually proceeds is sealed inside a laminate film 29 as a battery outer casing body. Here, the power generating element 21 has a configuration in which a negative electrode, a solid electrolyte layer 17, and a positive electrode are laminated. The negative electrode has a structure in which a negative electrode current collector 11' and a negative electrode active material layer 13 formed of lithium metal precipitated on the surface of the negative electrode current collector 11' are laminated. A negative electrode intermediate layer 14 is disposed so as to be adjacent to the surface of the negative electrode active material layer 13 facing the solid electrolyte layer 17. The positive electrode has a structure in which a positive electrode active material layer 15 is disposed on the surface of a positive electrode current collector 11". The negative electrode, the solid electrolyte layer, and the positive electrode are laminated in this order such that the negative electrode intermediate layer 14 and the positive electrode active material layer 15 face each other with the solid electrolyte layer 17 interposed therebetween. Thereby, the negative electrode, the solid electrolyte layer, and the positive electrode that are adjacent constitute one single battery layer 19. Therefore, it can be said that the laminate type secondary battery 10a illustrated in Fig. 1 has a configuration in which a plurality of single battery layers 19 are laminated to be electrically connected in parallel. The laminate type secondary battery 10a has a structure in which a negative electrode current collecting plate 25 and a positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between end portions of the laminate film 29. A confining pressure is applied to the laminate type secondary battery 10a in a lamination direction of the power generating element 21 by a pressurizing member (not illustrated). Therefore, the volume of the power generating element 21 is kept constant.

Hereinafter, main constituent members of the all-solid-state battery according to the present aspect will be described.

### [Current collector]

A current collector (negative electrode current collector, positive electrode current collector) has a function of mediating transfer of electrons from an electrode active material layer (negative electrode active material layer, positive electrode active material layer). A material constituting the current collector is not particularly limited. As a constituent material of the current collector, for example, a metal such as aluminum, nickel, iron, stainless steel, titanium, or copper, or a resin having conductivity can be adopted. The thickness of the current collector is not particularly limited, but is, for example, 10 to 100 µm.

### [Positive electrode active material layer]

The positive electrode active material layer contains a positive electrode active material and a solid electrolyte, and may contain a binder and a conductive aid as necessary.

The positive electrode active material has a function of releasing ions such as lithium ions during charge and occluding ions such as lithium ions during discharge. The positive electrode active material is preferably a metal oxide because the effect of the present invention can be more remarkably obtained. Examples of the positive electrode active material include metal oxides such as layered rock salt-type active materials such as LiCoO₂, LiMnO₂, LiNiO₂, LiVO₂, Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, and Si-containing active materials such as Li₂FeSiO₄ and Li₂MnSiO₄. Examples of the metal oxide other than those described above include Li₄Ti₅O₁₂. Among them, a composite oxide containing lithium and nickel (lithium nickel composite oxide) is preferably used. When a metal oxide containing nickel such as a lithium nickel composite oxide is brought into contact with a solid electrolyte in a reducing atmosphere such as a reduced pressure, reduction from nickel oxide to nickel easily occurs, and thus, deactivation of the positive electrode active material easily proceeds and resistance is easily increased. Therefore, the effect of the present invention can be still more remarkably obtained. As the lithium nickel composite oxide, Li(Ni-Mn-Co)O₂ and a material obtained by substituting a part of these transition metals with another element (hereinafter, also referred to as "NMC composite oxide") are preferably used. The NMC composite oxide has a layered crystal structure in which a lithium atom layer and a transition metal (Mn, Ni, and Co are arranged with regularity) atom layer are alternately stacked via an oxygen atom layer, one Li atom is included per atom of transition metal M, and the extractable Li amount is twice the amount of spinel type lithium manganese oxide, that is, the supply ability is two times higher, and thus it can have a high capacity.

As described above, the NMC composite oxide also includes a composite oxide in which a part of transition metal element is replaced with another metal element. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like, Ti, Zr, Nb, W, P, Al, Mg, V, Ca, Sr, and Cr are preferable, Ti, Zr, P, Al, Mg, and Cr are more preferable, and from the viewpoint of improving cycle characteristics, Ti, Zr, Al, Mg, and Cr are further preferable.

Since the theoretical discharge capacity is high, the NMC composite oxide preferably has a composition represented by General Formula (1): LiₐNi_{b}Mn_{c}Co_{d}MₓO₂ (wherein a, b, c, d, and x satisfy 0.98 ≤ a ≤ 1.2, 0.6 ≤ b ≤ 0.9, 0 < c ≤ 0.4, 0 < d ≤ 0.4, 0 ≤ x ≤ 0.3, and b + c + d + x = 1, and M is at least one selected from Ti, Zr, Nb, W, P, Al, Mg, V, Ca, Sr, and Cr). Here, a represents an atomic ratio of Li, b represents an atomic ratio of Ni, c represents an atomic ratio of Mn, d represents an atomic ratio of Co, and x represents an atomic ratio of M. In the all-solid-state battery according to the present aspect, the positive electrode active material is particularly preferably an NMC composite oxide (high-nickel NMC composite oxide) satisfying 0.8 ≤ b ≤ 0.9, 0 < c ≤ 0.2, 0 < d ≤ 0.2, and 0 ≤ x ≤ 0.2 in General Formula (1) described above. When the atomic ratio b of Ni is 0.8 or more, the balance between the capacity and the life characteristics is more excellent, which is preferable. When the atomic ratio b of Ni is 0.9 or less, the generation of gas associated with an electrode reaction can be reduced. Therefore, the cycle durability is less likely to decrease due to the generation of gas, which is preferable. Since the atomic ratio of nickel is high, the effect of the present invention can be still more remarkably obtained. At this time, in General Formula (1), c and d more preferably satisfy 0.05 ≤ c ≤ 0.2 and 0.03 ≤ d ≤ 0.2 from the viewpoint of improving the balance between the capacity and the life characteristics.

The average particle size of the positive electrode active material is not particularly limited, but is preferably 1 to 100 µm and more preferably 1 to 20 µm from the viewpoint of increasing the output. In the present specification, as the average particle size of particles, a median diameter (D50) measured by a particle size distribution measuring apparatus of a laser diffraction/scattering method is employed.

The positive electrode active material layer further contains a solid electrolyte. When the positive electrode active material layer contains the solid electrolyte, the ion conductivity of the positive electrode active material layer can be improved. Examples of the solid electrolyte include a sulfide solid electrolyte and an oxide solid electrolyte. In the present specification, the solid electrolyte refers to a material mainly made of an ion conductor that enables ion conduction in a solid, and particularly refers to a material having a lithium-ion conductivity at a normal temperature (25°C) of 1×10⁻⁵ S/cm or more, and the lithium-ion conductivity thereof is preferably 1×10⁻⁴ S/cm or more. Here, a value of the ion conductivity can be measured by an AC impedance method.

Note that, in the present specification, the solid electrolyte contained in the positive electrode active material layer is referred to as "first solid electrolyte", and the solid electrolyte contained in the solid electrolyte layer described later is referred to as "second solid electrolyte". Therefore, there is no meaning to the hierarchy "first" and "second" themselves, and these words are merely expressions for distinguishing the site where the solid electrolyte exists.

The solid electrolyte (first solid electrolyte) contained in the positive electrode active material layer is not particularly limited, but is preferably a sulfide solid electrolyte containing a S element from the viewpoint of exhibiting excellent lithium ion conductivity and being capable of further following the volume change of the electrode active material associated with charging and discharging. Since the sulfide solid electrolyte easily reduces the positive electrode active material under reduced pressure, the effect of improving the rapid charge characteristics by the method of the present invention can be still more remarkably obtained. The solid electrolyte contained in the positive electrode active material layer is more preferably a sulfide solid electrolyte containing a Li element, an M element, and a S element, where the M element includes at least one element selected from the group consisting of P, Si, Ge, Sn, Ti, Zr, Nb, Al, Sb, Br, Cl, and I, and is still more preferably a sulfide solid electrolyte containing a S element, a Li element, and a P element.

The sulfide solid electrolyte may have a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS. As the sulfide solid electrolyte, for example, LGPS represented by Li₍₄₋ₓ₎Ge₍₁₋ₓ₎PₓS₄ (x satisfies 0 < x < 1) or the like may be used. More specifically, examples thereof include LPS (Li₂S-P₂S₅), Li₇P₃S₁₁, Li_{3.2}P_{0.96}S, Li_{3.25}Ge_{0.25}P_{0.75}S₄, Li₁₀GeP₂S₁₂, Li₆PS₅X (where X is Cl, Br, or I), and the like. The description of "Li₂S-P₂S₅" means a sulfide solid electrolyte obtained by using a raw material composition containing Li₂S and P₂S₅, and the same applies to other descriptions. Among them, from the viewpoint of having high ion conductivity and being capable of further following the volume change of the electrode active material associated with charging and discharging due to low volume elastic modulus, the sulfide solid electrolyte is preferably selected from the group consisting of LPS (Li₂S-P₂S₅), Li₆PS₅X (where X is Cl, Br, or I), Li₇P₃S₁₁, Li_{3.2}P_{0.96}S, and Li₃PS₄.

Examples of the shape of the solid electrolyte include a particle shape such as a perfect spherical shape and an elliptical spherical shape, a thin film shape, and the like. When the solid electrolyte has a particle shape, the average particle size (D50) thereof is not particularly limited, but is preferably 0.01 µm or more and 40 µm or less, more preferably 0.1 µm or more and 20 µm or less, and still more preferably 0.1 µm or more and 10 µm or less.

In a preferred embodiment of the present invention, the positive electrode active material layer contains a lithium nickel composite oxide as a positive electrode active material and a sulfide solid electrolyte as a solid electrolyte. The present invention prevents a side reaction in which a positive electrode active material as an oxidant is reduced by a solid electrolyte as a reducing agent in a reduced-pressure environment. The effect of the present invention can be obtained regardless of the type of the positive electrode active material, but in particular, the lithium nickel composite oxide is easily reduced by the sulfide solid electrolyte, and the effect of improving the capacity and the rapid charge efficiency is high.

The positive electrode active material layer may further contain at least one of a conductive aid and a binder in addition to the positive electrode active material and the solid electrolyte described above.

Examples of the conductive aid include, but are not limited to, metals such as aluminum, stainless steel (SUS), silver, gold, copper, and titanium, alloys or metal oxides containing these metals; and carbon such as carbon fibers (specifically, vapor grown carbon fibers (VGCF), polyacrylonitrile-based carbon fibers, pitch-based carbon fibers, rayon-based carbon fibers, activated carbon fibers, and the like), carbon nanotubes (CNT), and carbon black (specifically, acetylene black, Ketjen black (registered trademark), furnace black, channel black, thermal lamp black, and the like). A particle-shaped ceramic material or resin material coated with the metal material by plating or the like can also be used as the conductive aid. Among these conductive aids, from the viewpoint of electrical stability, the conductive aid preferably contains at least one selected from the group consisting of aluminum, stainless steel, silver, gold, copper, titanium, and carbon, more preferably contains at least one selected from the group consisting of aluminum, stainless steel, silver, gold, and carbon, and still more preferably contains at least one kind of carbon. These conductive aids may be used singly or in combination of two or more kinds thereof.

When the positive electrode active material layer contains a conductive aid, the content of the conductive aid in the positive electrode active material layer is not particularly limited, but is, for example, 1 to 10 mass% and more preferably 2 to 8 mass%. When the content is in such a range, a stronger electron conduction path can be formed in the positive electrode active material layer, and this can effectively contribute to improvement of battery characteristics.

The binder used in the positive electrode active material layer is not particularly limited, and a known binder can be appropriately used. Examples of the binder include polyvinylidene fluoride (PVDF), a compound in which a hydrogen atom of PVDF is substituted with another halogen element, polytetrafluoroethylene (PTFE), styrene-butadiene rubber (SBR), and carboxymethyl cellulose (CMC). The content of the binder in the positive electrode active material layer is not particularly limited, but is, for example, 0.1 to 10 mass%.

The thickness of the positive electrode active material layer varies depending on the configuration of the intended all-solid-state battery, but is preferably within a range of 0.1 to 1000 µm, more preferably 10 to 200 µm, and still more preferably 40 to 100 µm.

### [Solid electrolyte layer]

The solid electrolyte layer is interposed between the positive electrode active material layer and the negative electrode active material layer and contains a solid electrolyte (usually as a main component). A specific form of the solid electrolyte (second solid electrolyte) contained in the solid electrolyte layer is not particularly limited, and examples and preferred forms of the first solid electrolyte described in the section of the positive electrode active material layer are adopted in the same manner. The solid electrolyte contained in the solid electrolyte layer may be the same as or different from the solid electrolyte contained in the positive electrode active material layer.

The solid electrolyte contained in the solid electrolyte layer is preferably a sulfide solid electrolyte. Since the sulfide solid electrolyte is easily oxidized, the charge-discharge efficiency of the all-solid-state battery containing the sulfide solid electrolyte is likely to decrease when the initial charging is performed in an oxygen-containing atmosphere. Therefore, the effect of the present invention can be still more remarkably obtained.

Among them, from the viewpoint of a high ion conductivity, it is preferably selected from the group consisting of LPS (Li₂S-P₂S₅), Li₆PS₅X (where X is Cl, Br, or I), Li₇P₃S₁₁, Li_{3.2}P_{0.96}S, and Li₃PS₄. In some cases, solid electrolytes other than the solid electrolyte described above may be used in combination.

The content of the solid electrolyte in the solid electrolyte layer is, for example, preferably within a range of 10 to 100 mass%, more preferably within a range of 50 to 100 mass%, further preferably within a range of 90 to 100 mass%, with respect to the total mass of the solid electrolyte layer.

The solid electrolyte layer may further contain a binder in addition to the solid electrolyte. The binder is not particularly limited, and a known binder can be appropriately used, but for example, the binder described in the above positive electrode active material layer can be similarly employed. The content of the binder in the solid electrolyte layer is not particularly limited, but is, for example, 1 to 10 mass%.

The solid electrolyte layer may have a form in which the solid electrolyte is supported on a porous body. At this time, the binder may be further supported on the porous body. The material of the porous body is not particularly limited, and conventionally known knowledge can be appropriately referred to.

The thickness of the solid electrolyte layer varies depending on the configuration of the intended all-solid-state battery, but is preferably within a range of 0.1 to 1000 µm, and more preferably 10 to 100 µm.

### [Negative electrode intermediate layer]

In the all-solid-state battery according to the present aspect, particularly in the case of a lithium-deposition type all-solid-state battery, it is preferable to have a negative electrode intermediate layer adjacent to a surface of the solid electrolyte layer facing the negative electrode current collector. The negative electrode intermediate layer is not particularly limited, but preferably contains at least one selected from the group consisting of a metal material capable of alloying with lithium and a carbon material capable of occluding lithium ions, and a binder. Note that the negative electrode intermediate layer preferably has conductivity as a whole. The volume resistivity of the negative electrode intermediate layer is not particularly limited, but is preferably 10² Ω·cm or less, and more preferably 10 Ω·cm or less. In the present specification, as the volume resistivity of the negative electrode intermediate layer, a value measured using an electrode resistance measurement system (manufactured by HIOKI E.E. CORPORATION, product name: RM2610) is adopted.

The negative electrode intermediate layer preferably contains at least one selected from the group consisting of metal materials capable of alloying with lithium. When the negative electrode intermediate layer contains a metal material capable of alloying with lithium, lithium metal can be more uniformly precipitated on the surface of the current collector. Specific examples of the metal material capable of alloying with lithium include indium (In), aluminum (Al), silicon (Si), tin (Sn), magnesium (Mg), gold (Au), silver (Ag), zinc (Zn), an alloy containing at least one of these metals, and the like. Among them, the metal material preferably contains at least one selected from the group consisting of In, Al, Si, Sn, Mg, Au, Ag, and Zn, more preferably contains at least one selected from the group consisting of Ag, Mg, Zn, and Al, still more preferably contains at least one selected from the group consisting of Ag, Mg, and Zn, and particularly preferably contains Ag.

The negative electrode intermediate layer preferably contains at least one selected from the group consisting of carbon materials capable of occluding lithium ions, in place of containing at least one selected from the group consisting of metal materials capable of alloying with lithium or in addition to containing at least one selected from the group consisting of metal materials capable of alloying with lithium. When the negative electrode intermediate layer contains a carbon material capable of occluding lithium ions, precipitation and growth of lithium dendrites can be suppressed. Specific examples of the carbon material capable of occluding lithium ions include carbon black (specifically, acetylene black, Ketjen black (registered trademark), furnace black, channel black, thermal lamp black, and the like), carbon nanotube (CNT), graphite, hard carbon, and the like. Among them, the carbon material preferably contains at least one selected from the group consisting of carbon black, and more preferably contains at least one selected from the group consisting of acetylene black, Ketjen black (registered trademark), furnace black, channel black, and thermal lamp black.

Note that the negative electrode intermediate layer may further contain a metal material other than the metal material capable of alloying with lithium (a metal material that is not alloyed with lithium), in addition to at least one selected from the group consisting of a metal material capable of alloying with lithium and a carbon material capable of occluding lithium ions. Examples of the metal material that is not alloyed with lithium include nickel (Ni), copper (Cu), and the like. According to one embodiment, the negative electrode intermediate layer contains at least one selected from the group consisting of a carbon material capable of occluding lithium ions, and a metal material that is not alloyed with lithium.

According to a preferred embodiment, the negative electrode intermediate layer contains at least one kind of metal particles containing the above-described metal material capable of alloying with lithium, and at least one kind of carbon particles containing the above-described carbon material capable of occluding lithium ions. By constituting the negative electrode intermediate layer using both the metal particles and the carbon particles, an all-solid-state battery having more excellent cycle characteristics can be obtained.

When both the carbon particles and the metal particles are used, the mass ratio of the carbon particles to the metal particles (carbon particles : metal particles) is preferably 10 : 1 to 1 : 1, more preferably 5 : 1 to 2 : 1, and still more preferably 4 : 1 to 2.5 : 1. The volume ratio of the carbon particles to the metal particles (carbon particles : metal particles) is preferably 99 : 1 to 70 : 30, and more preferably 95 : 5 to 75 : 25. When the blending ratio (mass ratio or volume ratio) of the carbon particles and the metal particles is within the above range, an all-solid-state battery more excellent in cycle characteristics can be obtained.

The negative electrode intermediate layer may further contain a binder. The type of the binder is not particularly limited, and those known in the present technical field can be appropriately adopted. Examples of the binder include polyvinylidene fluoride (PVDF), a compound in which a hydrogen atom of PVDF is substituted with another halogen element, polytetrafluoroethylene (PTFE), styrene-butadiene rubber (SBR), and carboxymethyl cellulose (CMC). Among them, the binder preferably contains polyvinylidene fluoride (PVDF), and is more preferably polyvinylidene fluoride (PVDF).

The content of the binder in the negative electrode intermediate layer is, for example, 8 mass% or more and 20 mass% or less, preferably 10 mass% or more and 18 mass% or less, and more preferably 12 mass% or more and 16 mass% or less, with respect to 100 mass% of the total mass of the metal material, the carbon material, and the binder. When the content of the binder is within the above range, precipitation and growth of lithium dendrite can be further suppressed.

The thickness of the negative electrode intermediate layer is not particularly limited, but is preferably 1 to 20 µm, more preferably 2 to 15 µm, and still more preferably 5 to 15 µm. When the thickness of the negative electrode intermediate layer is within the above range, both suppression of precipitation and growth of lithium dendrite and suppression of a decrease in energy density can be achieved.

### [Negative electrode active material layer]

The negative electrode active material layer contains a negative electrode active material. The type of the negative electrode active material is not particularly limited, and examples thereof include a carbon material, a metal oxide, and a metal active material. As the negative electrode active material, a metal containing lithium may be used. Such a negative electrode active material is not particularly limited as long as it is an active material containing lithium, and examples thereof include lithium-containing alloys in addition to lithium metal. Examples of the lithium-containing alloys include an alloy of Li and at least one of In, Al, Si, Sn, Mg, Au, Ag, and Zn. The negative electrode active material preferably contains lithium metal or a lithium-containing alloy, and particularly preferably contains lithium metal. Since lithium metal is easily oxidized, when the initial charging is performed in an oxygen-containing atmosphere, deactivation due to oxidation of lithium metal as a negative electrode active material is likely to occur, and thus charge-discharge efficiency is likely to decrease. Therefore, the effect of improving the capacity of the battery can be still more remarkably obtained. When the negative electrode active material is lithium metal, the negative electrode active material is particularly susceptible to the influence of the pressure distribution, so that the effect of suppressing a short circuit by performing the step of reducing the pressure is larger, and a greater improvement in performance can be obtained.

The negative electrode active material layer may further contain a solid electrolyte as necessary. A specific form of the solid electrolyte contained in the negative electrode active material layer is not particularly limited, and examples and preferred forms of the solid electrolyte described in the section of the positive electrode active material layer are adopted in the same manner. The content of the solid electrolyte in the negative electrode active material layer is, for example, preferably within a range of 1 to 60 mass% and more preferably within a range of 10 to 50 mass%.

The negative electrode active material layer may further contain at least one of a binder and a conductive aid in addition to the negative electrode active material and the solid electrolyte described above. The thickness of the negative electrode active material layer varies depending on the configuration of the intended all-solid-state battery, but is preferably within a range of 0.1 to 1000 µm, and more preferably 40 to 100 µm.

Note that, when the negative electrode active material uses lithium metal or a lithium-containing alloy, the all-solid-state battery according to the present aspect may be a so-called lithium-deposition type in which lithium metal as a negative electrode active material is deposited on a negative electrode current collector in a charging process. Therefore, in such an embodiment, the thickness of the negative electrode active material layer increases with the progression of the charging process, and the thickness of the negative electrode active material layer decreases with the progression of the discharging process. The negative electrode active material layer may not exist when the battery has been completely discharged, but in some cases, a negative electrode active material layer made of a certain amount of lithium metal may be disposed when the battery has been completely discharged. The thickness of the negative electrode active material layer (lithium metal layer) when the battery has been completely charged is not particularly limited, but is usually 0.1 to 1000 µm.

### <Method for manufacturing all-solid-state battery>

A method for manufacturing an all-solid-state battery according to one aspect of the present invention is a method for manufacturing an all-solid-state battery in which a power generating element is sealed inside a battery outer casing body, the power generating element including: a positive electrode including a positive electrode active material layer containing a positive electrode active material and a first solid electrolyte; a negative electrode including a negative electrode active material layer containing a negative electrode active material; and a solid electrolyte layer interposed between the positive electrode and the negative electrode and containing a second solid electrolyte, the manufacturing method including: a chemical conversion step including a step of initially charging the power generating element in an inert gas atmosphere; and a step of sealing the power generating element inside the battery outer casing body under reduced pressure after the chemical conversion step. According to the manufacturing method according to the present aspect, an all-solid-state battery excellent in both capacity and rapid charge characteristics can be obtained. Hereinafter, each step in the manufacturing method of the present aspect will be described.

### [Chemical conversion step (chemical conversion treatment step)]

The chemical conversion step includes a step of initially charging the power generating element including a positive electrode, a solid electrolyte layer, and a negative electrode in an inert gas atmosphere.

Specific forms of the positive electrode, the solid electrolyte layer, and the negative electrode are as described above. A method for producing the positive electrode, the solid electrolyte layer, and the negative electrode, and a method for producing a power generating element by laminating these members are not particularly limited. A step of preparing a positive electrode, a solid electrolyte layer, and a negative electrode, and laminating these members to prepare a power generating element is preferably performed in an inert gas atmosphere.

Examples of the inert gas include nitrogen, a rare gas (helium, argon, xenon, or neon), and the like, and argon is preferable. The inert gas may contain impurities, but from the viewpoint of preventing an adverse effect on the performance of the all-solid-state battery, the content of the impurities is less than 0.1 vol%, preferably less than 0.01 vol%, and still more preferably less than 0.001 vol%. Examples of the impurities include moisture, oxygen, nitrogen, solvents, and the like. In the method of the present aspect, the inert gas atmosphere refers to an environment filled with an inert gas having a total content of impurities of less than 0.1 vol%. In the method of the present aspect, the inert gas atmosphere is not particularly limited, but is preferably an inert gas atmosphere with a dew point of -60°C or lower, and preferably an inert gas atmosphere with a dew point of -68°C or lower.

The initial charging refers to a first charging of the power generating element including a positive electrode, a solid electrolyte layer, and a negative electrode. The initial charging may be performed by, for example, constant current charging, constant voltage charging, or constant-current constant-voltage charging. The current density at the time of initial charging is also not particularly limited, but is, for example, 0.1 to 5 mA/cm² and preferably 0.5 to 2 mA/cm². Within the above range, the modification (structural change) of the surface of the particles of the positive electrode active material effectively proceeds, and the rapid charge-discharge characteristics can be further improved.

The upper limit voltage (charge termination voltage) of the initial charging is not particularly limited, and can be appropriately adjusted according to the types of the positive electrode active material and the negative electrode active material to be used, and is, for example, 3.6 to 4.3 V and preferably 3.6 to 4.2 V. When the upper limit voltage is 3.6 V or more, the modification (structural change) of the surface of the particles of the positive electrode active material easily proceeds, so that the rapid charge-discharge characteristics can be further improved. When the upper limit voltage is 4.3 V or less, particularly 4.2 V or less, excessive oxygen desorption from the positive electrode active material and oxidation of the solid electrolyte can be suppressed. Therefore, in addition to excellent rapid charge characteristics, a higher capacity can be obtained.

In a preferred embodiment, the initial charging includes constant voltage charging. For example, the initial charging includes constant voltage charging or constant-current constant-voltage charging. When the initial charging includes constant voltage charging or constant-current constant-voltage charging, the power generating element can be held at a constant voltage for a certain period of time, so that the surface of the particles of the positive electrode active material can be sufficiently modified. As a result, the rapid charge characteristics can be further improved. The holding time at the upper limit voltage during constant voltage charging or constant-current constant-voltage charging is not particularly limited, but is, for example, 0.5 to 48 hours and preferably 1 to 36 hours. When the holding time at the upper limit voltage is within the above range, the modification of the surface of the particles of the positive electrode active material can further proceed by the chemical conversion step, so that the rapid charge-discharge characteristics can be further improved. In a preferred embodiment, in the initial charging, constant current charging is performed up to a desired upper limit voltage, and then constant voltage charging is performed. At this time, a preferred form of constant current charging and a preferred form of constant voltage charging are the same as those described above.

The temperature condition at the time of initial charging is also not particularly limited, but is, for example, 20 to 80°C and preferably 50 to 70°C.

In the power generating element after the initial charging is performed in an inert gas atmosphere, the surface of the particles of the positive electrode active material is modified, a stable structurally-altered layer is formed on the surface of the particles of the positive electrode active material, and the positive electrode active material is less likely to deteriorate. Therefore, in the power generating element after the initial charging is performed and before reduced-pressure sealing described later is performed, discharging may be performed, charging and discharging may be repeated, or the power generating element may be left to stand after charging or discharging. The power generating element after the initial charging is performed in an inert gas atmosphere may be held in an atmosphere, such as a reduced pressure, other than the inert gas atmosphere, or may be further charged and discharged in an atmosphere other than the inert gas atmosphere. Preferably, all steps from the initial charging to the reduced-pressure sealing described later are performed in an inert gas atmosphere at the time of the initial charging.

The chemical conversion step preferably further includes a step of discharging the charged power generating element after initially charging the power generating element. The effect of the chemical conversion treatment is exhibited only by initial charging, but since the positive electrode active material and the negative electrode active material in a charged state have high oxidizing power and reducing power, respectively, side reactions with a very small amount of impurities in an atmosphere (moisture, nitrogen, and the like) may occur at the time of subsequent sealing work. Therefore, the side reaction can be suppressed by discharging and then sealing the charged power generating element. As a result, the capacity and rapid charge characteristics of the battery can be further improved.

The step of discharging is preferably performed in an inert gas atmosphere. The temperature condition at the time of discharging is also not particularly limited, but is, for example, 20 to 80°C and preferably 50 to 70°C.

The current density at the time of discharging is also not particularly limited, but is, for example, 0.1 to 10 mA/cm² and preferably 1 to 5 mA/cm². It is preferable to perform constant current discharging at the above current density. The discharge termination voltage is also not particularly limited, but is, for example, 2.8 to 3.2 V.

### [Reduced-pressure sealing step]

In a reduced-pressure sealing step, the power generating element is sealed inside the battery outer casing body under reduced pressure after the chemical conversion step.

As the battery outer casing body, a bag-shaped case using the laminate film 29 containing aluminum, which can cover a power generating element as illustrated in Fig. 1, can be preferably used. As the laminate film, for example, a laminate film having a three-layer structure formed by laminating PP, aluminum, and nylon in this order, or the like can be used, but the laminate film is not limited thereto at all. From the viewpoint of excellent high output and cooling performance, and suitable application for batteries for large devices for EV and HEV, a laminate film is desirable. Since the group pressure applied to the power generating element from the outside can be easily adjusted, the battery outer casing body is more preferably a laminate film containing aluminum.

The method for sealing the power generating element inside the battery outer casing body under reduced pressure is not particularly limited. For example, when the battery outer casing body is a bag-shaped laminate film, a method of housing the power generating element inside the laminate film and depressurizing the inside of the laminate film using a known decompression device can be mentioned. Thereafter, the end portion of the laminate film is sealed by heat fusion or the like. The degree of vacuum inside the battery outer casing body at the time of pressure reduction is also not particularly limited, and conventionally known knowledge can be appropriately adopted. The degree of vacuum is preferably 11.3 kPa or less, more preferably 6.3 kPa or less, still more preferably 2 kPa or less, and particularly preferably 1.3 kPa or less. The temperature condition at the time of reduced-pressure sealing is also not particularly limited, but is, for example, 20 to 80°C.

Although one embodiment of the method for manufacturing an all-solid-state battery of the present invention has been described above, the present invention is not limited to only the configurations described in the above-described embodiment, and can be appropriately changed based on the description of the claims.

The type of battery to which the all-solid-state battery according to the present invention is applied, is for example, a bipolar type battery including a bipolar electrode having a positive electrode active material layer electrically coupled to one surface of a current collector and a negative electrode active material layer electrically coupled to an opposite surface of the current collector.

The secondary battery according to the present aspect may not be an all-solid type. That is, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

Note that the following embodiments are also included in the scope of the present invention: the method for manufacturing an all-solid-state battery according to claim 1 having the feature of claim 2; the method for manufacturing an all-solid-state battery according to claim 1 or 2 having the feature of claim 3; the method for manufacturing an all-solid-state battery according to any one of claims 1 to 3 having the feature of claim 4; the method for manufacturing an all-solid-state battery according to any one of claims 1 to 4 having the feature of claim 5; and the method for manufacturing an all-solid-state battery according to any one of claims 1 to 5 having the feature of claim 6.

### Examples

Hereinafter, the present invention will be described in more detail with reference to Examples. However, the technical scope of the present invention is not limited only to the following Examples. Note that, in the following examples and comparative examples, the inside of a glove box in an argon atmosphere with a dew point of -68°C or lower is an environment filled with argon gas having a total content of impurities of less than 0.001 vol%. The instruments, devices, and the like used in the glove box were sufficiently dried in advance.

### <Preparation example of evaluation cell>

### [Example 1]

### (Preparation of positive electrode active material layer)

As constituent materials of the positive electrode active material layer, an NMC composite oxide (LiNi_{0.8}Mn_{0.1}Co_{0.1}O₂) as a positive electrode active material, an argyrodite-type sulfide solid electrolyte (Li₆PS₅Cl) as a solid electrolyte, acetylene black as a conductive aid, and styrene-butadiene rubber (SBR) as a binder were prepared.

In a glove box in an argon atmosphere with a dew point of -68°C or lower, the positive electrode active material, the solid electrolyte, the conductive aid, and the binder were weighed to have a mass ratio of 72 : 24 : 3 : 1, and these materials were dispersed in xylene to prepare a positive electrode active material slurry. Next, the positive electrode active material slurry prepared above was applied onto both surfaces of a carbon-coated aluminum foil as a positive electrode current collector and dried to form a positive electrode active material layer (thickness of one surface: 100 µm), thereby preparing a positive electrode.

### (Preparation of solid electrolyte layer)

In a glove box in an argon atmosphere with a dew point of -68°C or lower, an argyrodite-type sulfide solid electrolyte (Li₆PS₅Cl) as a solid electrolyte and styrene-butadiene rubber (SBR) as a binder were weighed to have a mass ratio of 97 : 3, and these materials were dispersed in xylene to prepare a solid electrolyte slurry. The obtained solid electrolyte slurry was applied to a porous body having a thickness of 40 µm and dried to prepare a solid electrolyte layer (thickness: 40 µm) supported on the porous body.

### (Preparation of negative electrode intermediate layer)

In a glove box in an argon atmosphere with a dew point of -68°C or lower, acetylene black (AB), silver (Ag) nanoparticles, and polyvinylidene fluoride (PVDF) as a binder were weighed to have a mass ratio of 65 : 21 : 14, and these materials were dispersed in N-methylpyrrolidone to prepare a negative electrode intermediate layer slurry. The obtained negative electrode intermediate layer slurry was applied onto both surfaces of a stainless steel foil as a negative electrode current collector and dried to obtain a negative electrode intermediate layer (thickness of one surface: 10 µm).

### (Preparation of laminate of positive electrode, solid electrolyte layer, negative electrode intermediate layer, and negative electrode current collector)

In a glove box in an argon atmosphere with a dew point of -68°C or lower, the solid electrolyte layer and the negative electrode intermediate layer prepared above were disposed in this order on both surfaces of the positive electrode prepared above, and roll pressing was performed to obtain a laminate in which the positive electrode active material layer, the solid electrolyte layer, the negative electrode intermediate layer, and the negative electrode current collector were laminated in this order on both surfaces of the positive electrode current collector.

### (Preparation of laminate cell)

In a glove box in an argon atmosphere with a dew point of -68°C or lower, an aluminum positive electrode tab and a nickel-plated copper negative electrode tab were joined to each of the carbon-coated aluminum foil (positive electrode current collector) and the stainless steel foil (negative electrode current collector) of the laminate produced above by an ultrasonic welding machine. This was placed inside the aluminum laminate film, and the opening of the laminate film was heat-welded to hermetically seal the laminate film, thereby obtaining a laminate cell. The inside of the laminate cell thus produced is filled with argon gas having a total content of impurities of less than 0.001 vol%.

### (Chemical conversion treatment)

The chemical conversion treatment was performed while a confining pressure of 3 MPa was applied in the lamination direction of the laminate cell prepared above using the pressurizing member. The chemical conversion treatment was performed in a constant temperature thermostat bath set at 60°C using a charge-discharge test device (manufactured by HOKUTO DENKO CORPORATION, HJ-SD8). The laminate cell was placed in the thermostat bath, and after the cell temperature became constant, as a chemical conversion step, constant current charging was performed up to a cell voltage of 4.3 V at a current density of 1.0 mA/cm². Thereafter, constant current discharging was performed up to a cell voltage of 3.0 V at a current density of 2.0 mA/cm².

### (Reduced-pressure sealing)

In a glove box in an argon atmosphere with a dew point of -68°C or lower, the laminate end portion of the laminate cell subjected to the chemical conversion treatment was cut to form an opening, and the inside of the laminate film was reduced to a reduced pressure state of 1.3 kPa using a vacuum packaging machine (manufactured by TOSEI CORPORATION, TOSPACK) and hermetically sealed at 25°C to obtain an evaluation cell which is a lithium-deposition type all-solid-state battery of this example.

### [Example 2]

An evaluation cell of this example was prepared in the same manner as in Example 1 except that the charge termination voltage (upper limit voltage) in constant current charging was changed to 4.2 V in the chemical conversion treatment.

### [Example 3]

An evaluation cell of this example was prepared in the same manner as in Example 1 except that the chemical conversion treatment was performed as follows:

### (Chemical conversion treatment)

The chemical conversion treatment was performed while a confining pressure of 3 MPa was applied in the lamination direction of the laminate cell prepared above. The chemical conversion treatment was performed in a constant temperature thermostat bath set at 60°C using a charge-discharge test device (manufactured by HOKUTO DENKO CORPORATION, HJ-SD8). The laminate cell was placed in the thermostat bath, and after the cell temperature became constant, as a chemical conversion step, constant current charging was performed up to a cell voltage of 4.2 V at a current density of 1.0 mA/cm² followed by 4.2 V constant voltage charging for 24 hours. Thereafter, constant current discharging was performed up to a cell voltage of 3.0 V at a current density of 2.0 mA/cm².

### [Example 4]

An evaluation cell of this example was prepared in the same manner as in Example 1 except that the charge termination voltage (upper limit voltage) in constant current charging was changed to 3.6 V in the chemical conversion treatment.

### [Comparative Example 1]

A positive electrode active material layer, a solid electrolyte layer, and a negative electrode intermediate layer were prepared and a laminate of a positive electrode, a solid electrolyte layer, a negative electrode intermediate layer, and a negative electrode current collector was obtained in the same manner as in Example 1. In the preparation of the laminate cell of Example 1, the laminate was placed inside an aluminum laminate film, and then the inside of the laminate film was reduced to a reduced pressure state of 1.3 kPa using a vacuum packaging machine (TOSEI CORPORATION, TOSPACK) and hermetically sealed at 25°C. The same chemical conversion treatment as in Example 1 was performed using the laminate cell thus obtained to prepare an evaluation cell of this comparative example.

### [Comparative Example 2]

An evaluation cell of this comparative example was prepared in the same manner as in Example 1 except that reduced-pressure sealing in Example 1 was not performed.

### [Comparative Example 3]

The joined body formed by joining the positive electrode tab and the negative electrode tab in Example 1 was sealed in a laminate film under the atmosphere (in an atmosphere containing 20 vol% oxygen) to prepare a laminate cell. Subsequently, the above-described chemical conversion treatment was performed while a confining pressure of 3 MPa was applied in the lamination direction of the laminate cell using the pressurizing member. Thereafter, in a glove box in an argon atmosphere with a dew point of - 68°C or lower, the laminate end portion of the laminate cell subjected to the chemical conversion treatment was cut to form an opening, and the inside of the laminate film was reduced to a reduced pressure state of 1.3 kPa using a vacuum packaging machine (manufactured by TOSEI CORPORATION, TOSPACK) and hermetically sealed at 25°C to obtain an evaluation cell of this comparative example.

### <Evaluation of charge-discharge characteristics of all-solid-state battery>

The charge-discharge characteristics of the evaluation cell prepared above were evaluated under the following conditions. The charge-discharge characteristics of the battery were evaluated in a constant temperature thermostat bath set at 60°C using a charge-discharge test device (manufactured by HOKUTO DENKO CORPORATION, HJ-SD8) while a confining pressure of 3 MPa was applied in the lamination direction of the laminate cell using a pressurizing member. The battery was placed in the thermostat bath, and after the cell temperature became constant, constant current charging was performed up to a cell voltage of 4.3 V at a current density of 2.0 mA/cm². Thereafter, constant current discharging was performed up to a cell voltage of 3.0 V at a current density of 2.0 mA/cm². The capacity value per mass of the active material (mAh/g) was determined from the discharge capacity value obtained after repeating the charge/discharge cycle five times and the mass value of the active material contained in the positive electrode, and was taken as the rated capacity of the battery. The results are shown in Table 1 below. It can be used without any problem when it is O or Δ according to the following evaluation criteria:
O: 190 mAh/g or more
△: 160 mAh/g or more and less than 190 mAh/g
×: less than 160 mAh/g.

### <Evaluation of rapid charge characteristics of all-solid-state battery>

Among the evaluation cells prepared above, rapid charge characteristics of those having a rated capacity of 160 mAh/g or more were evaluated under the following conditions. The rapid charge characteristics of the battery were evaluated in a constant temperature thermostat bath set at 60°C using a charge-discharge test device (manufactured by HOKUTO DENKO CORPORATION, HJ-SD8) while a confining pressure of 3 MPa was applied in the lamination direction of the laminate cell using a pressurizing member. The battery was placed in the thermostat bath, and after the cell temperature became constant, constant current charging was performed up to a cell voltage of 4.3 V at a current density of 2.0 mA/cm² (corresponding to 0.1 C) to obtain a low-speed charge capacity. Subsequently, constant current discharging was performed up to a cell voltage of 3.0 V at a current density of 2.0 mA/cm², and then constant current charging was performed up to a cell voltage of 4.3 V at a current density of 20.0 mA/cm² (corresponding to 1 C) to obtain a rapid charge capacity. The ratio (percentage) of the rapid charge capacity to the low-speed charge capacity was defined as the rapid charge characteristics (%). The results are shown in Table 1 below. It can be used without any problem when it is O according to the following evaluation criteria:
O: The rapid charge characteristics are 70% or more.
△: The rapid charge characteristics are less than 70%.
×: Short circuit occurs during rapid charging.

### [Table 1]

**Table 1**

| | Chemical conversion step | | | | Reduced-pressure sealing step | Atmosphere in cell during evaluation | Rated capacity 0.1 C (mAh/g) | Rapid charge characteristics 1 C/0.1 C (%) |
|---|---|---|---|---|---|---|---|---|
| | Atmosphere in cell | Charging condition | | | | | | |
| | | Charging mode | Upper limit voltage | Holding time | | | | |
| Example 1 | Ar | CC | 4.3 V | - | Present | Reduced pressure | 203 ○ | 75 ○ |
| Example 2 | Ar | CC | 4.2 V | - | Present | Reduced pressure | 205 ○ | 82 ○ |
| Example 3 | Ar | CC-CV | 4.2 V | 24 hours | Present | Reduced pressure | 196 ○ | 88 ○ |
| Example 4 | Ar | CC | 3.6 V | - | Present | Reduced pressure | 205 ○ | 81 ○ |
| Comparative Example 1 | Reduced pressure | CC | 4.3 V | - | - | Reduced pressure | 194 ○ | 5 Δ |
| Comparative Example 2 | Ar | CC | 4.3 V | - | Absent | Ar | 202 ○ | Short circuit × |
| Comparative Example 3 | 20% oxygen | CC | 4.3 V | - | Present | Reduced pressure | 120 × | - |

From the results shown in Table 1, it can be seen that, as in Examples 1 to 4, according to the method of the present invention, an all-solid-state battery excellent in both the rated capacity and the rapid charge characteristics can be obtained. On the other hand, in the cell of Comparative Example 3 in which the chemical conversion step was performed under the atmosphere, a sufficient rated capacity was not obtained. In the cell of Comparative Example 1 in which the chemical conversion step was performed under reduced pressure, although a sufficient rated capacity was obtained, the rapid charge characteristics were low. In the cell of Comparative Example 2 in which reduced-pressure sealing was not performed, a short circuit occurred during rapid charging.

### Reference Signs List

- 10a: Laminate type secondary battery
- 11': Negative electrode current collector
- 11": Positive electrode current collector
- 13: Negative electrode active material layer
- 14: Negative electrode intermediate layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film

## Claims

1. A method for manufacturing an all-solid-state battery in which a power generating element is sealed inside a battery outer casing body, the power generating element including:
a positive electrode including a positive electrode active material layer containing a positive electrode active material and a first solid electrolyte;
a negative electrode including a negative electrode active material layer containing a negative electrode active material; and
a solid electrolyte layer interposed between the positive electrode and the negative electrode and containing a second solid electrolyte, the manufacturing method comprising:
a chemical conversion step including a step of initially charging the power generating element in an inert gas atmosphere; and
a step of sealing the power generating element inside the battery outer casing body under reduced pressure after the chemical conversion step.

2. The method for manufacturing an all-solid-state battery according to claim 1, wherein the initial charging includes constant voltage charging.

3. The method for manufacturing an all-solid-state battery according to claim 1 or 2, further comprising, in the chemical conversion step, a step of discharging the power generating element after initially charging the power generating element.

4. The method for manufacturing an all-solid-state battery according to claim 1 or 2, wherein the positive electrode active material is a lithium nickel composite oxide, and the first solid electrolyte is a sulfide solid electrolyte.

5. The method for manufacturing an all-solid-state battery according to claim 1 or 2, wherein the negative electrode active material contains lithium metal.

6. The method for manufacturing an all-solid-state battery according to claim 1 or 2, wherein a charge termination voltage of the initial charging is 3.6 to 4.2 V.
